Europäisches Patentamt

European Patent Office

Office européen des brevets

(19)

(11) Publication number: **0 114 895**
**B1**

(12) EUROPEAN PATENT SPECIFICATION

(45) Date of publication of patent specification: 04.05.88

(51) Int. Cl.⁴: **F 16 D 3/04**

(21) Application number: 83902293.6

(22) Date of filing: 26.07.83

(86) International application number:
PCT/JP83/00239

(87) International publication number:
WO 84/00586 16.02.84 Gazette 84/05

(54) COUPLING STRUCTURE OF SERVO MOTOR WITH DETECTOR.

(30) Priority: 27.07.82 JP 129643/82

(43) Date of publication of application:
08.08.84 Bulletin 84/32

(45) Publication of the grant of the patent:
04.05.88 Bulletin 88/18

(84) Designated Contracting States:
DE FR GB

(56) References cited:
N.P. Chironis: "Mechanisms, Linkages, and Mechanical Controls", Mc Graw-Hit Book Company, New York (US), 1965, page 334.
JP YI, 57-5532 (Clarion Co., Ltd.) 12. January 1982 (12.1.82) Figs. 2,3,4,5,6,7 and Claim.

(73) Proprietor: FANUC LTD
3580, Shibokusa Aza-Komanba Oshino-mura Minamitsuru-gun Yamanashi 401-05 (JP)

(72) Inventor: KAWADA, Shigeki
346-15, Shimodau7Hino-shi
Tokyo 191 (JP)
Inventor: AMEMIYA, Yoichi
1019-357, Nishiterakata-cho
Hachioji-shiu7Tokyo 192-01 (JP)
Inventor: SOGABE, Masatoyo
5-20-6, Sanda-chou7Hachioji-shi
Tokyo 193 (JP)
Inventor: ASABA, Eiki
3-27, Tamadaira
Hino-shiu7Tokyo 191 (JP)

(74) Representative: Allman, Peter John et al
MARKS AND CLERK Suite 301 Sunlight House Quay Street
Manchester M3 3JY (GB)

Courier Press, Leamington Spa, England.

# Description

The present invention relates to a coupling structure for mechanically coupling a servomotor and a detector for detecting the output revolution of the servomotor. More particularly, it relates to a coupling structure which compensates for misalignment between the output shaft of the servomotor and the input shaft of the detector and couples the shafts without play.

Background of the technical art

In general, a servomotor is used as a drive source for various servosystems in which the output revolution of the servomotor is detected so as to control the speed and the position of an object in the servosystem by controlling the servomotor in response to the detected output revolution of the servomotor. In this case, a detector is connected to an end of the output shaft of the servomotor so as to detect the output revolution of the servomotor. An example of such a detector is an encoder known per se. The input shaft of the encoder is coupled with the output shaft of the servomotor. In this case, it is difficult to completely align the shafts. Therefore, a coupling means which compensates for misalignment is disposed between the shafts. In using such a coupling means, it is required that the shafts be securely coupled without play so that the revolution of the output shaft of the servomotor is reliably transmitted to the input shaft of the detector at the time of starting the revolution or changing the revolutional speed and in order to avoid the creation of a non-responsive zone of the detector, in which zone the revolution is not detected even though the servomotor is rotated.

JP—A—575532 describes Oldham's couplings in which resilient projection members engage in grooves, the resilient projection members having slits formed therein. The slits are however no greater in depth than the length of the projection members and as a result it is difficult to achieve the required resilience to achieve reliable engagement and smooth movement of the projections in the grooves.

Therefore, an object of the present invention is to provide a structure for coupling a servomotor and a detector, the structure compensating for misalignment of the servomotor shaft and the detector shaft and mechanically coupling the shafts without play.

In accordance with the present invention, there is provided a coupling structure for mechanically coupling an output shaft and an input shaft, a groove being formed at the end of said output shaft and a groove being formed at the end of said input shaft, said structure comprising an Oldham's coupling which has projection members extending in crosswise directions and engaging said grooves, wherein a slit is formed in each of said projection members of said Oldham's coupling so as to form a resilient projection member, characterised in that the coupling structure is disposed between the output shaft of a servomotor and the input shaft of a detector for detecting the revolution of said output shaft of said servomotor and in that the depth of said slit is larger than the height of said resilient projection members, and a groove is formed in each outer surface of the base portion of said resilient projection member.

An embodiment of the present invention is described in detail hereinafter with reference to the drawings, in which:

Figure 1 is a diagram showing an arrangement of a coupling portion between a servomotor and a detector;

Figure 2 is a partial front view of a coupling structure in accordance with the present invention; and

Figure 3 is a perspective view of an Oldham's coupling used in the coupling structure in accordance with the present invention.

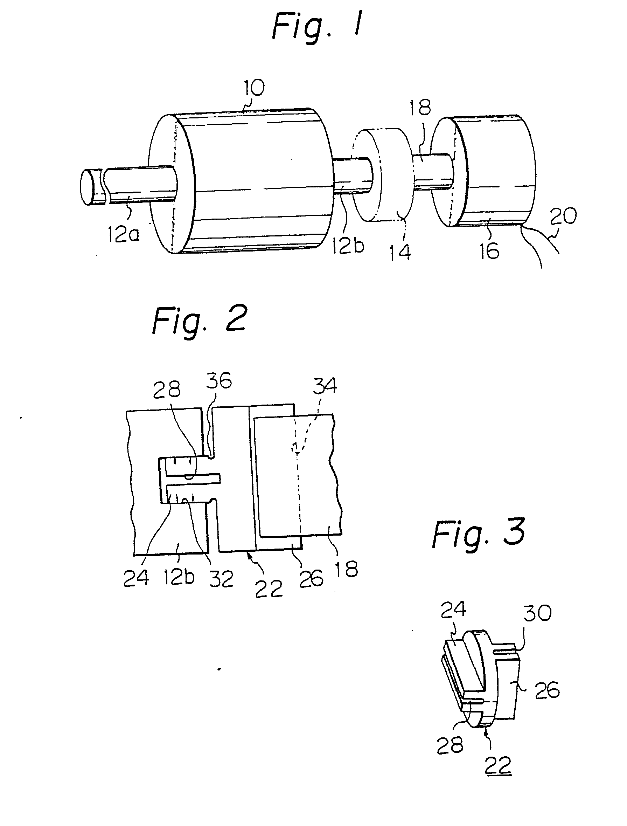

In Fig. 1, a servomotor 10 has output shafts 12a, 12b. The output shaft 12a is connected to a device (not shown) to be driven. The output shaft 12b of the servomotor 10 is mechanically coupled to an input shaft 18 of a detector 16 which is, for example, an encoder. Reference numeral 20 designates output signal lines of the detector 16. Features of the present invention reside in a coupling portion 14.

In Fig. 2, an Oldham's coupling 22 is disposed between the output shaft 12b of the servomotor and the input shaft 18 of the detector. As can be seen from Fig. 3, projection members 24 and 26 are provided on the front surface and the rear surface of the Oldham's coupling 22. The projection members 24, 26 extend in crosswise directions, i.e., directions perpendicular to each other. Slits 28, 30 are formed along the center of the projection members 24, 26, respectively, so that the projection members 24, 26 become resilient in the direction along which the slits 28, 30 are opened and closed. The Oldham's coupling 22 is disposed between the output shaft 12b and the input shaft 18 in such a manner that the resilient projection members 24, 26 are pushed into corresponding grooves 32, 34, respectively, which are formed on the output shaft 12b and the input shaft 18. By adopting such an arrangement, the servomotor and the detector are coupled without play since a gap is not formed between the projection members and the grooves due to the resiliency of the projection members. Also, the crosswise arrangement of the projection members 24, 26 disposed perpendicular to each other makes it possible to mechanically couple the shaft 12b and the shaft 18, if the output shaft 12b of the servomotor and the input shaft 18 of the detector are misaligned, so that the revolution is smoothly transmitted without generating an excessive load on the shafts, since the Oldham's coupling can slide along the grooves of the shafts during the rotation of the servomotor. The Oldham's coupling 22 can transmit a large torque since, the projection members fit into the grooves without play in the rotational direction. Also, the Oldham's coupling has a simple structure which enables it to be easily manufactured, thereby decreasing the cost thereof in addition to increasing the accuracy and reliability of transmission of the revolution.

As is illustrated in Fig. 2, a groove 36 of appropriate depth is formed in each outer surface of the base portion of the resilient projection member 24 so as to adjust the resiliency of the projection member 24.

The depth of the slits 28 and 30 is more than the height of the projection members 24 and 26 so as to obtain an optimum resiliency which guarantees smooth movement of the projection members 24 and 26 along the grooves 32 and 34 as well as reliable engagement of the projection members 24 and 26 and the grooves 32 and 34.

Reference numerals and names of parts corresponding thereto
10...servomotor
12a, 12b...output shaft
14...coupling portion
16...detector
18...input shaft
20...signal line
22...Oldham's coupling
24, 26...projection members
28, 30...slits
32, 34...grooves
36...groove

## Claim

A coupling structure (14) for mechanically coupling an output shaft (12b) and an input shaft (18), a groove (32) being formed at the end of said output shaft (12b) and a groove (34) being formed at the end of said input shaft (18), said structure comprising an Oldham's coupling (22) which has projection members (24, 26) extending in crosswise directions and engaging said grooves (32, 34), wherein a slit (28, 30) is formed in each of said projection members (24, 26) of said Oldham's coupling (22) so as to form a resilient projection member, characterised in that the coupling structure (14) is disposed between the output shaft (12b) of a servomotor (10) and the input shaft (18) of a detector for detecting the revolution of said output shaft (12b) of said servomotor (10) and in that the depth of said slit (28, 30) is larger than the height of said resilient projection members (24, 26), and a groove (36) is formed in each outer surface of the base portion of said resilient projection member (24, 26).

## Patentanspruch

Kupplungsanordnung (14) zum mechanischen Kuppeln einer Ausgangswelle (12b) und einer Eingangswelle (18), wobei an dem Ende der Ausgangswelle (12b) eine Nut (32) und an dem Ende der Eingangswelle (18) eine Nut (34) gebildet ist und die Anordnung eine Oldham-Kupplung (22) aufweist, die vorspringende Glieder (24, 26) besitzt, welche sich in einander überkreuzende Richtungen erstrecken und mit den Nuten (32, 34) in Eingriff kommen, wobei in jedem der vorspringenden Glieder (24, 26) der Oldham-Kupplung (22) ein Schlitz (28, 30) ausgebildet ist, um ein nachgiebiges vorspringendes Glied zu bilden, dadurch gekennzeichnet, daß die Kupplungsanordnung (14) zwischen der Ausgangswelle (12b) eines Servomotors (10) und der Eingangswelle (18) eines Detektors angeordnet ist, der die Umdrehung der Ausgangswelle (12b) des Servomotors (10) erfaßt, und daß die Tiefe des Schlitzes (28, 30) größer ist als die Höhe der elastischen vorspringenden Glieder (24, 30) und in jeder Außenfläche des Basisabschnitts des elastischen vorspringenden Glieds (24, 26) eine Nut (36) gebildet ist.

## Revendication

Structure d'accouplement (14) pour accoupler mécaniquement un arbre de sortie (12b) et un arbre d'entrée (18), une gorge (32) étant ménagée à l'extrémité de l'arbre de sortie (12b) et une gorge (34) étant ménagée à l'extrémité de l'arbre d'entrée (18), cette structure comprenant un accouplement Oldham (22) qui comporte des éléments en saillie (24, 26) s'étendant dans des directions croisées et s'engageant dans les gorges (32, 34), une fente (28, 30) étant ménagée dans chacun des éléments en saillie (24, 26) de l'accouplement Oldham (22) de façon à en faire un élément en saillie élastique, caractérisée en ce que la structure d'accouplement (14) est disposée entre l'arbre de sortie (12b) d'un servo-moteur (10) et l'arbre d'entrée (18) d'un détecteur destiné à détecter la rotation de l'arbre de sortie (12b) du servomoteur (10), en ce que la profondeur de ladite fente (28, 30) est plus grande que la hauteur des éléments élastiques en saillie (24, 26), et en ce qu'une gorge (36) est ménagée dans chacune des surfaces extérieures de la partie de base dudit élément élastique en saillie (24, 26).

# Fig. 1

# Fig. 2

# Fig. 3